# EUROPEAN PATENT SPECIFICATION

(11) **EP 3 186 623 B1**
(45) Date of publication and mention of the grant of the patent: **29.05.2019**
(21) Application number: 14780420.7
(22) Date of filing: 28.08.2014
(51) Int. Cl.: G01N 25/56

(54) **DEVICE FOR SETTING AND CONTROLLING THE HUMIDITY OF A GAS**
VORRICHTUNG ZUR EINSTELLUNG UND KONTROLLE DER FEUCHTIGKEIT EINES GAS
DISPOSITIF POUR LA CONFIGURATION ET LE CONTRÔLE DE L'HUMIDITÉ D'UN GAZ

(43) Date of publication of application: 05.07.2017
(73) Proprietor: BR Beheer B.v., 4921 KR Made (NL)
(72) Inventor: RENSE, Barend, NL-4921 KR Made (NL); RENSE, Reinier, NL-4921 KR Made (NL)
(74) Representative: Renkema, Jaap
(86) International application number: PCT/EP2014/068279
(87) International publication number: WO 2016/029952

(56) References cited:
- US-A1- 2010 106 333
- US-A1- 2013 255 670

## Description

The invention relates to a device for setting and controlling the humidity of a gas, comprising: flow generating means which are adapted to realize a flow of a gas in the device during operation thereof; humidity setting means which are adapted to perform a humidity setting action on gas flowing through the device during operation thereof, comprising at least two tubular members for the gas to flow through, arranged in parallel; humidity sensing means for sensing the humidity of the gas in the device; and controlling means for controlling access to the tubular members of the humidity setting means, at least at one end of the tubular members, in dependence of the humidity of the gas as sensed by the humidity sensing means during operation of the device and a reference value of the humidity.

A device having features in common with the device as mentioned is known from CN 101738454. The known device is a humidity generator of the flow-through type, which comprises a flow meter, a mixing chamber, a thermostatic chamber, a control valve and a housing having an inlet and an outlet in which all components of the humidity generator as mentioned are situated. The thermostatic chamber accommodates a plurality of flow-through members, one end of each flow-through member being connected with the flow meter through the control valve, and the other end being connected with the mixing chamber. The insides of the flow-through members are provided with permeable tubes. In an embodiment, the device comprises three flow-through members, wherein each of the flow-through members is adapted to increase the humidity of gas, and wherein the control valve is a three-way valve adapted to control the opening and closing of the flow-through members on the basis of a desired value of humidity of a gas to be humidified by the device.

In accordance with one embodiment disclosed in US 2013/255670 A1, a method for performing a surgical procedure may include atomizing at least a portion of a humidification liquid. The method may also include receiving a gas from a source. The method may further include generating a vortex flow of the received gas. The method may further include combining the vortex flow of the received gas with at least a portion of the atomized humidification liquid in order to humidify the received gas. The method may further include providing the humidified gas adjacent to or into a patient.

US 2010/106333 A1 discloses an HVAC data processing and communication network and a method of manufacturing the same. In an embodiment, the HVAC data processing and communication network includes at least one environmental sensor, at least one subnet and a subnet controller. The subnet controller is configured to discover the at least one environmental sensor, the at least one subnet and at least one damper controller. The subnet controller is further configured to set up the network for zoned operation in the event that at least two of the at least one environmental sensor are discovered.

There is a need for a device for setting and controlling the humidity of a gas such as air which is of uncomplicated design and yet capable of performing its intended functions fast and accurate. It is an object of the invention to provide a device of the type as mentioned which is capable of at least one of decreasing and increasing the humidity of a gas, which is robust and reliable, and which can do without complex and relatively expensive components such as a flow meter. Such a device would be very well suitable to be applied in a calibration apparatus of humidity probes, for example, or in a context of research which needs to take place at a predetermined level of humidity. The object is achieved by means of a device as defined in the opening paragraph, wherein at least one of the tubular members of the humidity setting means is an active tubular member comprising one of 1) a humidity decreasing tubular member adapted to let gas flow through and decrease the humidity of the gas, and 2) a humidity increasing tubular member adapted to let gas flow through and increase the humidity of the gas, and wherein at least one of the tubular members of the humidity setting means is an inactive tubular member adapted to just let gas flow through without performing a humidity setting action on the gas.

On the basis of the presence in the device of at least one active tubular member and at least one inactive tubular member as mentioned, it is possible to set a broad range of values of humidity of gas to be treated in the device. The humidity of gas can quickly and easily be put to a reference value, while the device can be compact and can do without complicated components like flow meters. On the basis of a comparison between the actual humidity of a gas as sensed by the humidity sensing means and the reference value of the humidity, the controlling means determine an appropriate setting of the humidity setting means. When it appears that the actual humidity of the gas corresponds to the reference value of the humidity, the controlling means allow access to the inactive tubular member. Assuming that the humidity setting means comprise at least one humidity decreasing tubular member, when the results of the comparison indicates that the gas is too wet, the controlling means allow access to the humidity decreasing tubular member, and possibly also to the inactive tubular member in case letting the gas flow through the humidity decreasing tubular member only would result in the humidity getting too low. In fact, the possibility of letting one part of the gas flow through the humidity decreasing tubular member and another part of the gas through the inactive tubular member allows for setting the correct value of the humidity without a need for complex controlling measures. Similarly, assuming that the humidity setting means comprise at least one humidity increasing tubular member, when the results of the comparison indicates that the gas is too dry, the controlling means allow access to the humidity increasing tubular member, and possibly also to the inactive tubular member in case letting the gas flow through the humidity increasing tubular member only would result in the humidity getting too high.

The humidity setting means may comprise at least two active tubular members, which may be of the same kind or of a different kind, i.e. which may be two humidity decreasing tubular members, two humidity increasing tubular members, or a combination of a humidity decreasing tubular member and a humidity increasing tubular member. In order to have a compact and practical construction, it is preferred for each of the active tubular members to be associated with at least one inactive tubular member, in a parallel arrangement, so that the accurate control of the humidity of the gas as described in the foregoing can be realized, wherein combinations of at least one active tubular member and at least one inactive tubular member are made for letting pass a flow of gas. In fact, each of the active tubular members can be arranged such as to extend alongside an inactive tubular member, wherein it is possible to achieve that providing access to the combination of an active tubular member and an inactive tubular member can be done without a need for a complex construction.

For the sake of completeness, and with reference to the above explanation of the operation of the tubular members of the humidity setting means, it is noted that the term "parallel" as used in respect of the arrangement of the tubular members should primarily be understood in a functional sense, not in a constructional sense, although it is possible in a practical embodiment of the device according to the invention for the tubular members to extend parallel to each other.

In a practical embodiment having a minimum of components for realizing an increase of humidity or a decrease of humidity according to desire without a need for replacing cartridges or the like, it suffices for the humidity setting means to comprise no more than one combination of three tubular members arranged in parallel, namely a humidity decreasing tubular member, a humidity increasing tubular member, and an inactive tubular member, wherein both the humidity decreasing tubular member and the humidity increasing tubular member are associated with the inactive tubular member. It is possible to have a combination of four tubular members in such a case, wherein each of the humidity decreasing tubular member and the humidity increasing tubular member is combined with its own inactive tubular member for having the possibility to control the extent to which the gas is dried and wettened, respectively, but in view of compactness, it is advantageous when both active tubular members are combined with only one inactive tubular member. In practice, there is no situation in which it would be necessary to provide access to all three tubular members at the same time. Instead, providing access to one of the three tubular members alone, partially providing access to the inactive tubular member and partially providing access to the humidity decreasing tubular member, and partially providing access to the inactive tubular member and partially providing access to the humidity increasing tubular member can be expected to be the most common situations.

When the invention is applied, it is a practical possibility to have a humidity decreasing tubular member which does not require a small cross-section for preventing humidity decreasing action of the tubular member on gas downstream of the tubular member, and which, as a consequence, does not require high pressures and is very well capable of functioning with a general flow of gas as present in the device during operation thereof, wherein there is no need for an additional, dedicated pump or the like. The reason is that it is possible to accurately control access to the active tubular members, at one end or both ends of the tubular members, as will be explained in more detail later on. Contrariwise, in the art, it is common use to have a humidity decreasing tubular member with small cross-sectional dimensions, and to take measures for increasing pressure when a humidity decreasing tubular member is applied, which involves increase of costs and, for example, noise generated during operation.

The humidity decreasing tubular member may comprise a replaceable cartridge filled with dry air and a moisture absorbing material, whereas the humidity increasing tubular member may comprise a replaceable cartridge filled with humid air and a material capable of releasing moisture. The material of the humidity increasing tubular member may comprise antibacterial agents. Also, it is possible to use a UV lamp or the like for disinfecting the material. In any case, an increase of the humidity can be achieved on the basis of various principles, including using a pump for blowing bubbles in water, thermic principles, ultrasonic principles, displacing gas over water and/or ice, etc. Furthermore, it is possible for the humidity decreasing tubular member to be connected to an external source having a drying function, and for the humidity increasing tubular member to be connected to an external source having a humidifying function. In general, it is possible for the active tubular members to be connected to an external device for treating the gas, for example by adapting the temperature of the gas, wherein means are provided for guiding the gas from the tubular member in question to the external device, and back, in order to ensure that the gas is put to a condition which is optimal for being dried or wettened, depending on the type of material used in the tubular member.

In order to be capable of accurately dosing the gas in one or more of the tubular members of the humidity setting means, it is practical for the controlling means to comprise valve means which are adapted to set an extent to which each of the tubular members of the humidity setting means is open at an end which is an inlet end as seen in a flow-through direction of the tubular members. The valve means may comprise any suitable means being capable of realizing various degrees of access to each of the tubular members, ranging, per tubular member, from minimum access to maximum access, for example, a two or more way valve or a mixing valve. It is furthermore practical for the controlling means to comprise drive means for setting the position of the valve means, wherein the controlling means are adapted to control operation of the drive means in dependence of the humidity of the gas as sensed by the humidity sensing means during operation of the device and the reference value of the humidity. The drive means may comprise a combination of a suitable type of motor and an actuation rod driven by the motor, for example, or may comprise a mechanism of pneumatic, hydraulic or electric nature.

The valve means may comprise a suitable type of controllable valve such as a two or more way valve or a mixing valve. In general, the valve may comprise planar parts being positioned on top of each other and having openings, which parts are displaceable with respect to each other such that the flow-through opening for the gas in the assembly of the parts can be varied, wherein an opening of one part coincides with an opening of an adjacent part, or is at least partially covered by the adjacent part. A similar working principle is found in parts having surfaces which are designed to slide along each other in a specific manner, such as rotatable or slidable disc valves, rotatable or slidable cylindrical valves, conical valves, ball valves, etc. Alternatively, the valve may comprise a part having an opening and a part having a surface of specific shape, and may be a plate valve, butterfly valve, cone valve, a flexible valve having variable shape, etc.

In order to have high accuracy and speed of setting the humidity of the gas in the device, it is advantageous for the valve means to be adapted to set an extent to which the active tubular member, and possibly also the inactive tubular member, is open at the end facing the humidity sensing means. In that case, assuming that otherwise the active tubular member would be open at that end, displacement of moisture from the gas in a direction from the humidity sensing means to the tubular member, which may be opposite to the direction of the flow of the gas, is restricted, so that the influence of such flow on the value of the humidity of the gas is minimized. Even when the flow rate of the gas is quite low, the accuracy and speed of setting the humidity of the gas can be acceptable and improved with respect to conventional situations by controlling access to the active tubular member at both ends of the tubular member, including the end facing the humidity sensing means, which may be an outlet end as seen in the flow-through direction.

In a practical embodiment of the device according to the invention, the valve means comprise a slidably arranged plate, at an end of at least two tubular members of the humidity setting means, which is provided with an opening for allowing gas to flow through the plate. The dimensions of such opening and the positioning of the plate with respect to the tubular members can be chosen such that the opening can be put in a position for allowing maximum access to one of the tubular members, or in a position for allowing partial access to one tubular member and partial access to an adjacent tubular member. Varying the position of the opening can simply be done by sliding the plate, wherein the controlling means can be adapted to determine the position of the plate with respect to the tubular members in dependence of the humidity of the gas as sensed by the humidity sensing means during operation of the device and the reference value of the humidity. All in all, the application of a plate as mentioned involves simplicity and robustness of structure, which is desirable in order to have a reliable device requiring only minimum maintenance. The plate may be associated with all of the tubular members of the humidity setting means, so that no other means for controlling access of the gas to the tubular members are required, which contributes to an uncomplicated construction having a minimum of components.

In order to ensure the highest accuracy and speed of setting the humidity of the gas in the device, as mentioned in the foregoing, it is preferred for the device to comprise a first plate and a second plate coupled to the first plate, wherein both plates are slidably arranged, one at a first end of at least two tubular members of the humidity setting means, and the other at a second end of the tubular members, wherein both plates are provided with an opening for allowing gas to flow through the respective plate, and wherein the positions of the openings of the plates with respect to the tubular members as seen in the flow-through direction of the tubular members correspond to each other. By applying such a combination of plates, it is possible to realize similar access and discharge at the respective ends of the tubular members.

As an alternative to at least one plate as mentioned in the foregoing, the valve means may comprise a rotatably arranged disc, which is associated with an end of at least two tubular members of the humidity setting means, and which is provided with openings for allowing gas to flow through the disc. By rotating the disc, the openings are put in an appropriate position for realizing access to the respective tubular members to an extent as determined.

In view of practical application of the device, it is advantageous if the humidity sensing means comprise a sensor which is arranged at a position close to the tubular members of the humidity setting means, which does not alter the fact that another position of the sensor is possible as well within the framework of the invention. Also, it is advantageous if the device is equipped with a user interface coupled to the controlling means for allowing a user of the device to set the reference value of the humidity. In general, in respect of the humidity sensing means, it is noted that these means may comprise any suitable instrument such as a dew point sensor, or a humidity probe, or a sensor which is adapted to function according to yet another principle.

The device may comprise a measuring chamber for accommodating at least the humidity sensing means, the measuring chamber having two openings in a wall thereof, which openings are adapted to allow for exchange of gas between an interior and an exterior of the measuring chamber. The design of the measuring chamber can be adapted to the intended use of the device, which may be calibration of measuring equipment, for example. The measuring chamber may accommodate at least one tubular member of the humidity setting unit besides the humidity sensing means, but that is not necessary within the framework of the invention.

In practical applications of the device according to the invention, it may be useful to have a tubular connection member for interconnecting the openings of the measuring chamber, so that an atmospherically closed circuit can be realized in the device. In such a case, the flow generating means may be adapted to realize circulation of the gas through both the connection member and the measuring chamber. In general, the flow generating means may be adapted to realize circulation of the gas in the device including the tubular members of the humidity setting means, and comprise no more than a single unit for displacing the gas in order to have simplicity of construction. For example, the flow generating means may be a single pump, or a single (electrostatic) fan, or a single compressor, or the like.

The device according to the invention has the advantage of uncomplicated construction as mentioned earlier. Additionally, the noise level of the device can be low on the basis of the fact that it suffices to have a general flow of gas in the device, wherein there is no need for applying additional pumps or the like at the tubular members of the humidity setting means besides a single pump in the device for generating the general flow. Also, in case the valve means comprise the plate or the disc as described in the foregoing, the position of which can be controlled in a smooth and quiet manner, the noise level can be kept at a low value, whereas in the art, more complex valve means are used which can be rather noisy. Furthermore, the device according to the invention can be designed such as to be capable of functioning in a broad range of temperatures, including temperatures below 0°C. For example, the valve means may comprise a valve such as a cone valve having parts which are made of a combination of metal and silicone.

The present invention will be further explained on the basis of the following description of an embodiment of a device for setting and controlling the humidity of a gas, with reference to the drawing, in which equal reference signs indicate equal or similar components, and in which:

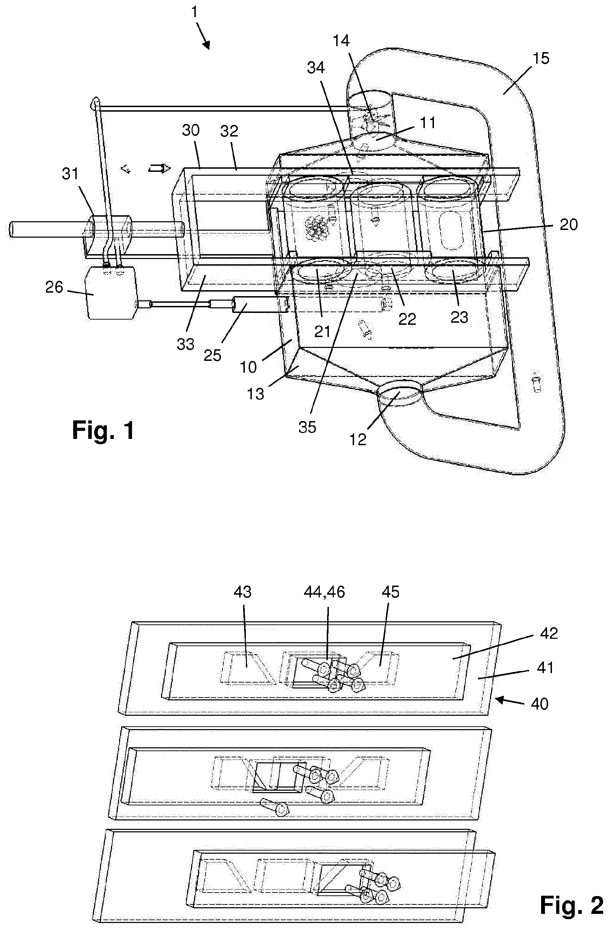

figure 1 diagrammatically shows a perspective view of a first embodiment of a device according to the invention for setting and controlling the humidity of a gas, wherein components are depicted in a transparent fashion in order to provide a complete view of the various components of the device, and wherein a possible flow of gas through the device is indicated by means of arrows;
figure 2 diagrammatically shows a perspective view of a plate valve which may be part of the device according to the invention, wherein three possible positions of the valve are depicted, and wherein flows of gas through the valve in the various positions are indicated by means of arrows; and

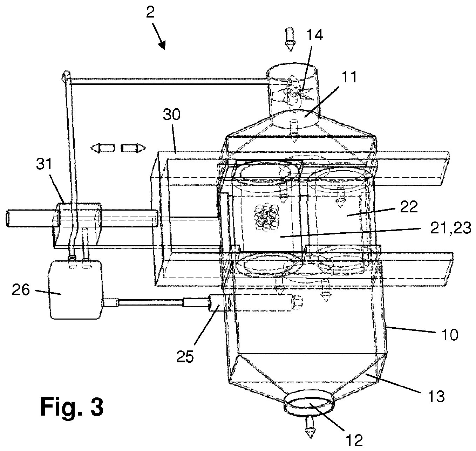

figure 3 diagrammatically shows a perspective view of a second embodiment of a device according to the invention for setting and controlling the humidity of a gas, wherein components are depicted in a transparent fashion in order to provide a complete view of the various components of the device, and wherein a possible flow of gas through the device is indicated by means of arrows.

Figure 1 shows a first embodiment of a device 1 according to the invention for setting and controlling the humidity of a gas. The device 1 is suitable to be used for supplying a gas in situations in which it is important for the humidity of the gas to be exactly at a predetermined value. Examples of such situations comprise calibration of humidity probes and research performed under controlled conditions. The gas may be air, which does not alter the fact the device 1 is capable of handling every other possible type of gas as well.

The device 1 comprises a measuring chamber 10, and openings 11, 12 in a wall 13 thereof, which openings 11, 12 are adapted to let pass a flow of gas to and from the measuring chamber 10, respectively, and which are used as inlet and outlet, respectively, of the measuring chamber 10 during operation of the device 1. In the shown example, a preferred positioning of the openings 11, 12 is shown, in which the openings 11, 12 are arranged in line with each other. Such arrangement is preferred in order to promote a smooth gas flow between the openings 11, 12, through the measuring chamber 10, with a minimum of noise, but such arrangement is not essential within the framework of the invention.

For the purpose of putting gas in motion in the device 1, i.e. generating a gas flow, the device 1 comprises suitable flow generating means such as a pump 14. In the shown example, the pump 14 is arranged near an opening which is indicated by reference numeral 11 in figure 1, and which, for the sake of clarity, will be referred to as inlet 11 in the following, whereas the other opening will be referred to as outlet 12, which does not alter the fact that the pump 14 may as well be operated such that the first opening 11 is used as outlet and the latter opening 12 is used as inlet. Within the framework of the invention, other positions of the pump 14 are feasible, including a position near the latter opening 12, as long as the pump 14 is capable of generating a gas flow through the device 1 including the measuring chamber 10, between the openings 11, 12.

For the purpose of performing the function of setting the humidity of gas flowing through the device 1 when the device 1 is operated, the device 1 is equipped with a humidity setting unit 20, which is arranged between the inlet 11 and the outlet 12 in the shown example. In particular, the humidity setting unit 20 is adapted to dry the gas, humidify the gas, or leave the humidity level of the gas unamended, depending on the requirements of a particular situation. To this end, the humidity setting unit 20 comprises a number of tubular members 21, 22, 23. In the shown example, two active tubular members 21, 23, i.e. tubular members 21, 23 which are adapted to influence the humidity of the gas, are situated in the humidity setting unit 20, namely a humidity decreasing tubular member 21, which will hereinafter be referred to as drying member 21, and a humidity increasing tubular member 23, which will hereinafter be referred to as humidifying member 23. Furthermore, in the shown example, one inactive tubular member 22, i.e. a tubular member 22 which is adapted to just let the gas flow through without influencing the humidity of the gas, is situated in the humidity setting unit 20. The inactive tubular member 22 will hereinafter be referred to as inactive member 22.

The humidity setting unit 20 may comprise more than just one drying member 21, just one inactive member 22, and just one humidifying member 23. An advantage of having only three members 21, 22, 23, one of each possible type, is that the device 1 can be compact and small, so that the device 1 can be easily transported to any possible site. In the shown example, the three members 21, 22, 23 are arranged such as to extend parallel to each other, at substantially the same level in the measuring chamber 10, in a row-like arrangement in which the inactive member 22 is arranged between the drying member 21 and the humidifying member 23. Although this arrangement of the three members 21, 22, 23 is preferred for reasons of having a smooth flow of gas in the measuring chamber 10 during operation of the device 1, this arrangement is not essential within the framework of the invention.

Both the drying member 21 and the humidifying member 23 are adapted to allow a flow of gas to pass therethrough. The drying member 21 may comprise a replaceable cartridge filled with dry air and a moisture absorbing material. Alternatively, the drying member 21 may have a separate opening which allows for replacing used-up moisture absorbing material by fresh moisture absorbing material. In any case, the drying member 21 is designed such that the humidity of gas passing through the drying member 21 during operation of the device 1 is decreased. In a similar manner, the humidifying member 23 may comprise a replaceable cartridge filled with humid air and a material capable of releasing moisture. Alternatively, the humidifying member 23 may have a separate opening which allows for replacing used-up moisture releasing material by fresh moisture releasing material. In any case, the humidifying member 23 is designed such that the humidity of gas passing through the humidifying member 23 during operation of the device 1 is increased. It suffices for the inactive member 22 to comprise nothing more than a simple tube.

Besides the humidity setting unit 20, the device 1 according to the invention comprises humidity sensing means such as a humidity probe 25 for sensing an actual value of the humidity of gas in the device 1. The humidity probe 25 or similar means can have any suitable position in the device 1, as long as the humidity sensing function of the probe 25 is not hindered. In the shown example, the humidity probe 25 is located closely to the humidity setting unit 20, at a position between the humidity setting unit 20 and the outlet 12.

For the purpose of realizing a condition of the device 1 in which the humidity of gas flowing through the measuring chamber 10 is put to a reference value by means of the humidity setting unit 20, the device 1 comprises controlling means for controlling access of gas to the members 21, 22, 23 of the humidity setting unit 20. Within the framework of the invention, the controlling means can have any suitable design. In the shown example, the controlling means comprise a control box 26 for receiving and interpreting information from the humidity probe 25 representing an actual value of the humidity of gas in the device 1, which has a memory or the like for storing a reference value of the humidity, and which is adapted to compare the actual value to the reference value. The device 1 may comprise a user interface (not shown) by means of which a user can set the reference value in the memory of the control box 26, so that it is possible to adapt the operation of the device 1 to any reference value as desired. Furthermore, in the shown example, the controlling means comprise a slide 30 and means 31 for driving the slide 30 such as to assume a position as determined by the control box 26. In the following, details of the slide 30 will be elucidated. It is noted that the slide 30 is just one of numerous possibilities in respect of means for distributing a gas flow over the members 21, 22, 23 of the humidity setting unit 20. Hence, none of the details of the slide 30 as will described in the following is essential within the framework of the invention.

The slide 30 extends through the measuring chamber 10 and comprises two plates 32, 33, namely an inlet plate 32 extending at a level close to the members 21, 22, 23 of the humidity setting unit 20, at an inlet side thereof, i.e. at an end of the members 21, 22, 23 facing the inlet 11, and an outlet plate 33 extending at a level close to the members 21, 22, 23, at an outlet side thereof, i.e. at an end of the members 21, 22, 23 facing the outlet 12. The plates 32, 33 are arranged in parallel, and are positioned such that longitudinal axes of the members 21, 22, 23 of the humidity setting unit 20 are perpendicular to the main surfaces of the plates 32, 33. The slide 30 is slidable in a direction which is both perpendicular to the longitudinal axes as mentioned and which coincides with a direction of the row-like arrangement of the members 21, 22, 23. This direction is indicated in figure 1 by means of arrows.

The slide 30 is adapted to allow gas to flow through the humidity setting unit 20 according to one of the following options: flow through the drying member 21 only, flow through the inactive member 22 only, flow through the humidifying member 23 only, flow through the drying member 21 and the inactive member 22, and flow through the humidifying member 23 and the inactive member 22, wherein the distribution of the total gas flow over a combination of members 21, 22, 23 is variable and can be set such as to be optimal under the circumstances of particular cases. In order to direct a gas flow as desired, the inlet plate 32 is provided with an opening 34, and the outlet plate 33 is provided with an opening 35 at a corresponding position. Advantageously, the dimensions of each of the openings 34, 35 correspond to the dimensions of the members 21, 22, 23 of the humidity setting unit 20 at the inlet side thereof and the outlet side thereof, respectively, as is the case in the shown example.

The device 1 according to the invention is operated in the following way. The device 1 is filled with a gas to be put to a predetermined humidity which is input as a reference value to the control box 26. The pump 14 is activated, as a result of which a flow of the gas is generated, wherein the gas is made to flow through the measuring chamber 10, from the inlet 11 to the outlet 12. In the process, the humidity probe 25 senses the actual value of the humidity of the gas and communicates this actual value to the control box 26. In the control box 26, a comparison is made between the actual value and the reference value. Depending on the outcome of the comparison, the control box 26 determines whether the drive means 31 need to be activated, and if so, how the drive means 31 need to be operated as far as distance and direction (extension or retraction) of the displacement to be realized of the slide 30 are concerned. The following situations may occur:
1) The gas appears to be too wet, to such an extent that allowing all of the gas to flow through the drying member 21 would put the humidity of the gas to the reference value or to a value still higher than the reference value, in which situation the drive means 31 are operated to put the slide 30 to a position for letting the total flow of gas flow through the drying member 21 if the slide 30 is not already in the position as mentioned.
2) The gas appears to be too wet, to a lesser extent than in the first situation, wherein it is possible to put the humidity of the gas to the reference value by directing one part of the total flow of gas through the drying member 21 and the other part of the total flow of gas through the inactive member 22. In this situation, the exact position of the slide 30 is determined such that the proper ratio between drying and no action can be realized. In case the slide 30 is at another position, the drive means 31 are operated to put the slide 30 to that exact position as determined in the control box 26.
3) The humidity of the gas appears to be at the reference value, in which situation the drive means 31 are operated to put the slide 30 to a position for letting the total flow of gas flow through the inactive member 22 if the slide 30 is not already in the position as mentioned.
4) The gas appears to be too dry, to such an extent that allowing all of the gas to flow through the humidifying member 23 would put the humidity of the gas to the reference value or to a value still lower than the reference value, in which situation the drive means 31 are operated to put the slide 30 to a position for letting the total flow of gas flow through the humidifying member 23 if the slide 30 is not already in the position as mentioned.
5) The gas appears to be too dry, to a lesser extent than in the fourth situation, wherein it is possible to put the humidity of the gas to the reference value by directing one part of the total flow of gas through the humidifying member 23 and the other part of the total flow of gas through the inactive member 22. In this situation, the exact position of the slide 30 is determined such that the proper ratio between humidifying and no action can be realized. In case the slide 30 is at another position, the drive means 31 are operated to put the slide 30 to that exact position as determined in the control box 26.

Hence, the operation of the device 1 according to the invention is an ongoing process of sensing the actual value of humidity of a gas, making a comparison between the actual value and a reference value, and adjusting the position of the slide 30 if the outcome of the comparison and information regarding the actual position of the slide 30 indicates that it is necessary to do so in order to achieve that the reference value is realized/maintained. Once the process of setting the humidity of gas in the device 1 has started, it only takes a minimum of time before the reference value is achieved, due to the possibility to directly adapt the way in which the humidity setting unit 20 is enabled to treat the gas on the basis of measurements of the actual value of the humidity of the gas.

As has already been noted in the foregoing, the application of the slide 30 and the means 31 for driving the slide 30 is not essential within the framework of the present invention. The device 1 according to the invention may be equipped with another type of valve means for controlling the path to be followed by the gas through the humidity setting unit 20 and associated means for driving the valve means. An example of valve means which may be used in the device 1 instead of the slide 30 as shown in figure 1 is shown in figure 2. The design of the alternative valve means and the way in which the alternative valve means are operated will be explained in the following.

Like the slide 30, the alternative valve means are adapted to set an extent to which each of the members 21, 22, 23 of the humidity setting unit 20 is open at the inlet side and/or the outlet side thereof. In other words, like the slide 30, the alternative valve means are adapted to distribute a total flow of gas over the members 21, 22, 23. To that end, the alternative valve means comprise at least one plate valve 40 having two plates 41, 42, namely a basic plate 41 which has a fixed arrangement and a setting plate 42 which is arranged such as to slide along the basic plate 41. The basic plate 41 is provided with three openings 43, 44, 45 of a special design, arranged in a row-like fashion. A central opening 44 of the row has a rectangular shape, while the two openings 43, 45 which are present at either side of the central opening 44 are shaped like a beveled rectangle, wherein the bevel is present at the side facing the central opening 44. The setting plate 42 is provided with one rectangular opening 46 of which the dimensions correspond to the dimensions of the central opening 44 of the basic plate 41.

The plate valve 40 is preferably arranged such that each of the openings 43, 44, 45 of the basic plate 41 is associated with the members 21, 22, 23 of the humidity setting unit 20. In that case, the distribution of gas over the members 21, 22, 23 can be controlled by setting the position of the setting plate 42 with respect to the basic plate 41. For example, the setting plate 42 can be put to such a position that the opening 46 thereof coincides with the central opening 44 of the basic plate 41, as shown at the top side of figure 2. In that case, all of a gas flow is directed through the central opening 44, so that the situation in which the gas is not subjected to any humidity setting action is obtained. According to another option, as shown at the center of figure 2, the setting plate 42 is put to such a position that only part of a side opening 43, 45 and only part of the central opening 44 of the basic plate 41 are exposed. In that case, a total gas flow is divided in a gas flow through part of the side opening 43, 45 concerned and a gas flow through part of the central opening 44, so that the situation in which only part of the gas is subjected to a drying action or a humidifying action in order to achieve the reference value of the humidity of the gas is obtained. The ratio of the two gas flows is determined by the exact position of the setting plate 42 with respect to the basic plate 41, and is controlled on the basis of a comparison between an actual value of the humidity of the gas and a reference value, as explained earlier. According to yet another option, the setting plate 42 is put to such a position that the opening 46 thereof fully exposes one of the side openings 43, 45, as shown at the bottom side of figure 2. In that case, all of a gas flow is directed through the side opening 43, 45 concerned, so that the situation in which all of the gas is subjected to a drying action or a humidifying action is obtained.

An advantage of both the slide 30 as shown in figure 1 and the plate valve 40 as shown in figure 2 is that it is possible to have smooth, accurate and fast control of the humidity of the gas without a need for a complex construction. For the sake of completeness, it is noted that when two plate valves 40 are applied in the device 1 according to the invention, a first plate valve 40 is arranged at the inlet side of the humidity setting unit 20, and a second valve plate 40 is arranged at the outlet side of the humidity setting unit 20.

Optionally, the device 1 according to the invention comprises a tubular connection member 15 as shown in figure 1, connecting the outlet 12 of the measuring chamber 10 to the inlet 11. The connection member 15 is suitable to be used in situations in which it is desired to have an atmospherically closed circuit. This may be the case when the humidity of the gas in the device 1 is at the reference value and the gas is only made to flow through the inactive member 22 of the humidity setting unit 20. Also, applying the connection member 15 enables operation at different pressures and may save drying agent and/or water in the humidity setting unit 20.

Figure 3 shows a second embodiment of a device 2 according to the invention for setting and controlling the humidity of a gas. The second embodiment resembles the first embodiment as described in the foregoing with reference to figure 1 to a large extent. However, a notable difference resides in the fact that the second embodiment comprises only one active tubular member 21, 23 besides the inactive member, wherein the active tubular member 21, 23 may be one of a drying member 21 and a humidifying member 23. In particular, the active tubular member 21, 23 may be adapted to receive and accommodate a cartridge containing a moisture absorbing material or a cartridge containing a material capable of releasing moisture, depending on whether the device 2 is intended to be used for drying a gas or humidifying a gas.

Apart from the fact that the device 2 comprises a single active tubular member 21, 23 instead of two different active tubular members 21, 23, the device 2 is of the same design as the device 1 as shown in figure 1, and, as a consequence thereof, is operated in a comparable manner. In particular, the device 2 as shown in figure 3 also comprises a measuring chamber 10 having two openings 11, 12 in a wall 13 thereof, a pump 14 for realizing a flow of gas in the device 2 during operation thereof, a humidity probe 25 for sensing an actual value of the humidity of gas in the device 2, a control box 26 for receiving and interpreting information from the humidity probe 25 representing an actual value of the humidity of gas in the device 2, and controlling means comprising a slide 30 and means 31 for driving the slide 30 such as to assume a position as determined by the control box 26.

It will be clear to a person skilled in the art that the scope of the present invention is not limited to the examples discussed in the foregoing, but that several amendments and modifications thereof are possible without deviating from the scope of the invention as defined in the attached claims.

For the sake of completeness, it is noted that the description of the capability of the device 1, 2 according to the invention to put the humidity of a gas to a reference value should be understood for its practical meaning, implying that it is possible to set the reference value with acceptable deviation tolerance. In many possible applications of the device 1, 2, it is often desirable to have a large humidity range, for example a range of 3% to 98%. Furthermore, it is noted that the fact that the members 21, 22, 23 of the humidity setting unit 20 are denoted as being tubular should be understood such as to mean nothing more than that the members 21, 22, 23 are provided with an entrance opening for letting in gas, an exit opening for letting out gas, and something like a circumferentially closed wall for directing gas from the entrance opening to the discharge opening. For example, the shape of the cross-section of the members 21, 22, 23 may be chosen freely within that general concept, although a circular shape is preferred in view of the associated smoothness of flow.

According to the invention, humidity setting means are applied which comprise at least one active tubular member 21, 23 and at least one inactive tubular member 22, arranged in parallel. In the example as described in the foregoing with reference to the figures, the humidity setting means comprise at least one active tubular member 21, 23 and one inactive tubular member 22, arranged in parallel. That does not alter the fact that within the framework of the invention, it is possible for the humidity setting means to comprise an assembly of tubular members in which there is not only a parallel arrangement of tubular members, but also an arrangement in series. For example, the humidity setting means may comprise an active tubular member 21, 23 and an inactive tubular member 22 which are arranged in parallel in the measuring chamber 10, and furthermore an active tubular member 21, 23 which is arranged in series with the two tubular members 21, 22, 23 mentioned first, in the measuring chamber 10, or outside of the measuring chamber 10, in a member connected to the measuring chamber 10 through one of the openings 11, 12 thereof. In such a case, a humidity decreasing tubular member 21 and an inactive tubular member 22 may be located in the measuring chamber 10, and a humidity increasing tubular member 23 may be present in a member serving as an inlet tube of the measuring chamber 10. During operation, the humidity of the gas is always increased by means of the humidity increasing tubular member 23, and the humidity of the gas is subsequently reduced in the measuring chamber 10 by means of the humidity decreasing tubular member 21 (or kept at the level as set by the humidity increasing tubular member 23 when the gas is made to pass through the inactive tubular member 22 only).

The aspect of controlling access to the tubular members 21, 22, 23 at both ends of the tubular members 21, 22, 23, at least in respect of the at least one active tubular member 21, 23 which is part of the humidity setting means of the device 1, 2 according to the invention is independent of the aspect of having at least one active tubular member 21, 23 and at least one inactive tubular member 22 in a parallel arrangement. Hence, the invention also relates to a device 1, 2 for setting and controlling the humidity of a gas, comprising: flow generating means 14 which are adapted to realize a flow of a gas in the device 1, 2 during operation thereof; humidity setting means which are adapted to perform a humidity setting action on gas flowing through the device 1, 2 during operation thereof, comprising at least one of 1) a humidity decreasing tubular member 21 adapted to let gas flow through and decrease the humidity of the gas, and 2) a humidity increasing tubular member 23 adapted to let gas flow through and increase the humidity of the gas; humidity sensing means 25 for sensing the humidity of the gas in the device 1, 2; and controlling means 26, 30, 31, 40 for controlling access to the tubular member 21, 23, at both ends of the tubular member 21, 23, in dependence of the humidity of the gas as sensed by the humidity sensing means 25 during operation of the device 1, 2 and a reference value of the humidity.

As explained in the foregoing, it is advantageous for the controlling means 26, 30, 31, 40 to comprise valve means 30, 40 which are adapted to set an extent to which the tubular member 21, 23 of the humidity setting means is open, at both ends of the tubular member 21, 23. Such valve means 30, 40 may be adapted to set the extent to which the tubular member 21, 23 of the humidity setting means is open in a corresponding manner for both ends of the tubular member 21, 23.

Due to the application of the valve means 30, 40 as mentioned, exchange of moisture with the tubular member 21, 23 in a direction which is opposite to the direction of the flow of the gas is minimized, as a result of which it is not necessary for the tubular member 21, 23 to be designed such as to realize a narrow passage and to be combined with a dedicated pump or the like for forcing the gas to flow through the narrow passage as is the case in conventional situations. Hence, it is possible for the flow generating means 14 to be adapted to realize circulation of the gas in the device 1, 2 including the tubular member 21, 23 and to comprise no more than a single unit for displacing the gas, such as a pump, or a (electrostatic) fan, or a compressor. As a result, there is no need for a complex design, and the noise generated during operation of the device 1, 2 is minimized.

The device 1, 2 according to the invention is intended for setting and controlling the humidity of a gas, as described in the foregoing. That does not alter the fact that the device 1, 2 is also suitable to be used in other applications, for example, for the purpose of setting and controlling the concentration of a certain component in a gas, such as oxygen or carbon dioxide, or a liquid, namely when the active tubular members 21, 23 are adapted to add or remove the component to or from the gas or liquid, and when the device is equipped with sensing means for sensing the concentration of the component in the gas or liquid in the device, and the controlling means are adapted to perform their controlling function in dependence of the concentration of the component in the gas or liquid as sensed by the sensing means during operation of the device and a reference value of the concentration. In such a case, the device is generalized as follows: device for setting and controlling the concentration of a component in a gas or liquid, comprising: flow generating means which are adapted to realize a flow of a gas or liquid in the device during operation thereof; composition setting means which are adapted to perform a composition setting action on gas or liquid flowing through the device during operation thereof, comprising at least two tubular members for the gas or liquid to flow through, arranged in parallel; sensing means for sensing the concentration of the component in the gas or liquid in the device; and controlling means for controlling access to the tubular members of the composition setting means, at least at one end of the tubular members, in dependence of the concentration of the component in the gas or liquid as sensed by the sensing means during operation of the device and a reference value of the concentration; wherein at least one of the tubular members of the composition setting means is an active tubular member comprising one of 1) a concentration decreasing tubular member adapted to let gas or liquid flow through and decrease the concentration of the component in the gas or liquid, and 2) a concentration increasing tubular member adapted to let gas or liquid flow through and increase the concentration of the component in the gas or liquid, and wherein at least one of the tubular members of the composition setting means is an inactive tubular member adapted to just let gas or liquid flow through without performing a composition setting action on the gas or liquid.

Also, in such a case, the device is generalized as follows: device for setting and controlling the concentration of a component in a gas or liquid, comprising: flow generating means which are adapted to realize a flow of a gas or liquid in the device during operation thereof; composition setting means which are adapted to perform a composition setting action on gas or liquid flowing through the device during operation thereof, comprising at least one of 1) a concentration decreasing tubular member adapted to let gas or liquid flow through and decrease the concentration of the component in the gas or liquid, and 2) a concentration increasing tubular member adapted to let gas or liquid flow through and increase the concentration of the component in the gas or liquid; sensing means for sensing the concentration of the component in the gas or liquid in the device; and controlling means for controlling access to the tubular member of the composition setting means, at both ends of the tubular member, in dependence of the concentration of the component in the gas or liquid as sensed by the sensing means during operation of the device and a reference value of the concentration.

The various details which are applicable to the device 1, 2 for setting and controlling the humidity of a gas, a number of which are defined in the dependent claims, are similarly applicable to the device when intended for setting and controlling the concentration of a certain component in a gas or liquid. In the latter case, the humidity decreasing tubular member is replaced by a concentration decreasing tubular member, the humidity increasing tubular member is replaced by a concentration increasing tubular member, the humidity sensing means are replaced by sensing means for sensing the concentration of the component in the gas or liquid in the device, and the controlling means which are adapted to perform their controlling function in dependence of the humidity of the gas as sensed by the sensing means during operation of the device and a reference value of the humidity are replaced by controlling means which are adapted to perform their controlling function in dependence of the concentration of the component in the gas or liquid as sensed by the sensing means during operation of the device and a reference value of the concentration. Furthermore, for the sake of completeness, it is noted that the term "fluid" can be used instead of the wording "gas or liquid". Also, it is noted that the term "component" as used in the foregoing may be understood such as to include a portion of a total mixture having a certain value of energy such as heat.

## Claims

1. Device (1, 2) for setting and controlling the humidity of a gas, comprising:
- flow generating means (14) which are adapted to realize a flow of a gas in the device (1, 2) during operation thereof;
- humidity setting means which are adapted to perform a humidity setting action on gas flowing through the device (1, 2) during operation thereof, comprising at least two tubular members (21, 22, 23) for the gas to flow through, arranged in parallel;
- humidity sensing means (25) for sensing the humidity of the gas in the device (1, 2); and
- controlling means (26, 30, 31, 40) for controlling access to the tubular members (21, 22, 23) of the humidity setting means, at least at one end of the tubular members (21, 22, 23), in dependence of the humidity of the gas as sensed by the humidity sensing means (25) during operation of the device (1, 2) and a reference value of the humidity; wherein at least one of the tubular members (21, 22, 23) of the humidity setting means is an active tubular member (21, 23) comprising one of 1) a humidity decreasing tubular member (21) adapted to let gas flow through and decrease the humidity of the gas, and 2) a humidity increasing tubular member (23) adapted to let gas flow through and increase the humidity of the gas, and wherein at least one of the tubular members (21, 22, 23) of the humidity setting means is an inactive tubular member (22) adapted to just let gas flow through without performing a humidity setting action on the gas.

2. Device (1) according to claim 1, wherein the humidity setting means comprise at least two active tubular members (21, 23) and at least one inactive tubular member (22), and wherein each of the active tubular members (21, 23) is associated with at least one inactive tubular member (22), in a parallel arrangement.

3. Device (1) according to claim 1 or 2, wherein the humidity setting means comprise a combination of three tubular members (21, 22, 23) arranged in parallel, namely a humidity decreasing tubular member (21), a humidity increasing tubular member (23), and an inactive tubular member (22), wherein both the humidity decreasing tubular member (21) and the humidity increasing tubular member (23) are associated with the inactive tubular member (22).

4. Device (1, 2) according to any of claims 1-3, wherein the controlling means (26, 30, 31, 40) comprise valve means (30, 40) which are adapted to set an extent to which each of the tubular members (21, 22, 23) of the humidity setting means is open at an end of the tubular members (21, 22, 23) facing the humidity sensing means (25).

5. Device (1, 2) according to claim 4, wherein the valve means (30, 40) are furthermore adapted to set an extent to which at least the active tubular member (21, 23) of the humidity setting means is open at the other end of the tubular member (21, 23).

6. Device (1, 2) according to claim 5, wherein the valve means (30, 40) are adapted to set the extent to which at least the active tubular member (21, 23) of the humidity setting means is open in a corresponding manner for both ends of the tubular member (21, 23).

7. Device (1, 2) according to any one of claims 4-6, wherein the controlling means (26, 30, 31, 40) comprise drive means (31) for setting the position of the valve means (30, 40), and wherein the controlling means (26, 30, 31, 40) are adapted to control operation of the drive means (31) in dependence of the humidity of the gas as sensed by the humidity sensing means (25) during operation of the device (1, 2) and the reference value of the humidity.

8. Device (1, 2) according to claim 4, wherein the valve means (30) comprise a slidably arranged plate (33), at an end of at least two tubular members (21, 22, 23) of the humidity setting means, which is provided with an opening (35) for allowing gas to flow through the plate (33).

9. Device (1, 2) according to claim 8, wherein the plate (33) is associated with all of the tubular members (21, 22, 23) of the humidity setting means, and wherein preferably the controlling means (26, 30, 31) are adapted to determine the position of the plate (33) with respect to the tubular members (21, 22, 23) of the humidity setting means in dependence of the humidity of the gas as sensed by the humidity sensing means (25) during operation of the device (1, 2) and the reference value of the humidity.

10. Device (1, 2) according to claim 5 or 6, wherein the valve means (30) comprise a first plate (32) and a second plate (33) coupled to the first plate (32), wherein both plates (32, 33) are slidably arranged, one at a first end of at least two tubular members (21, 22, 23) of the humidity setting means, and the other at a second end of the tubular members (21, 22, 23), wherein both plates (32, 33) are provided with an opening (34, 35) for allowing gas to flow through the respective plate (32, 33), and wherein the positions of the openings (34, 35) of the plates (32, 33) with respect to the tubular members (21, 22, 23) as seen in a flow-through direction of the tubular members (21, 22, 23) correspond to each other.

11. Device (1, 2) according to claim 4 or 5, wherein the valve means (30) comprise a rotatably arranged disc, which is associated with an end of at least two tubular members (21, 22, 23) of the humidity setting means, and which is provided with openings for allowing gas to flow through the disc.

12. Device (1, 2) according to any of claims 1-11, further comprising a user interface coupled to the controlling means (26, 30, 31, 40) for allowing a user of the device (1, 2) to set the reference value of the humidity, and wherein preferably the humidity sensing means (25) comprise a sensor which is arranged at a position close to the tubular members (21, 22, 23) of the humidity setting means.

13. Device (1) according to any of claims 1-12, further comprising a measuring chamber (10) for accommodating at least the humidity sensing means (25), the measuring chamber (10) having two openings (11, 12) in a wall (13) thereof, which openings (11, 12) are adapted to allow for exchange of gas between an interior and an exterior of the measuring chamber (10), and a tubular connection member (15) extending outside of the measuring chamber (10) for interconnecting the openings (11, 12) of the measuring chamber (10),and wherein preferably the flow generating means (14) are adapted to realize circulation of the gas through both the connection member (15) and the measuring chamber (10).

14. Device (1, 2) according to any of claims 1-13, wherein the flow generating means (14) are adapted to realize circulation of the gas in the device (1, 2) including the tubular members (21, 22, 23) of the humidity setting means, and comprise no more than a single unit for displacing the gas, such as a pump, or a (electrostatic) fan, or a compressor.

15. Device (1, 2) according to any of claims 1-14, wherein the at least one active tubular member (21, 23) of the humidity setting means comprises a replaceable cartridge.

## Patentansprüche

1. Vorrichtung (1, 2) zum Einstellen und Regeln der Feuchtigkeit eines Gases, umfassend:
- Strömungserzeugungsmittel (14), die ausgelegt sind, während des Betriebs derselben einen Strom eines Gases in der Vorrichtung (1, 2) zu realisieren;
- Feuchtigkeitseinstellmittel, die ausgelegt sind, eine Feuchtigkeitseinstellwirkung auf durch die Vorrichtung (1, 2) während ihres Betriebs strömendes Gas auszuführen, umfassend mindestens zwei rohrförmige Elemente (21, 22, 23), durch die das Gas strömt und die parallel angeordnet sind;
- Feuchtigkeitserfassungsmittel (25) zum Erfassen der Feuchtigkeit des Gases in der Vorrichtung (1, 2); und
- Steuermittel (26, 30, 31, 40) zum Steuern des Zugriffs auf die rohrförmigen Elemente (21, 22, 23) der Feuchtigkeitseinstellmittel, mindestens an einem Ende der rohrförmigen Elemente (21, 22, 23) in Abhängigkeit der von den Feuchtigkeitserfassungsmitteln (25) während des Betriebs der Vorrichtung (1, 2) erfassten Feuchtigkeit des Gases und einem Referenzwert der Feuchtigkeit; wobei mindestens eines der rohrförmigen Elemente (21, 22, 23) der Feuchtigkeitseinstellmittel ein aktives rohrförmiges Element (21, 23) ist, das eines von Folgendem umfasst: 1) ein Feuchtigkeit verringerndes rohrförmiges Element (21), das ausgelegt ist, Gas durchströmen zu lassen und die Feuchtigkeit des Gases zu verringern, und 2) ein Feuchtigkeit erhöhendes rohrförmiges Element (23), das ausgelegt ist, Gas durchströmen zu lassen und die Feuchtigkeit des Gases zu erhöhen, und wobei mindestens eines der rohrförmigen Elemente (21, 22, 23) der Feuchtigkeitseinstellmittel ein inaktives rohrförmiges Element (22) ist, das ausgelegt ist, Gas einfach durchströmen zu lassen, ohne eine Feuchtigkeitseinstellungsaktion für das Gas durchzuführen.

2. Vorrichtung (1) nach Anspruch 1, wobei die Feuchtigkeitseinstellmittel mindestens zwei aktive rohrförmige Elemente (21, 23) und mindestens ein inaktives rohrförmiges Element (22) umfassen, und wobei jedes der aktiven rohrförmigen Elemente (21, 23) mindestens einem inaktiven rohrförmigen Elements (22) in paralleler Anordnung zugeordnet ist.

3. Vorrichtung (1) nach Anspruch 1 oder 2, wobei die Feuchtigkeitseinstellmittel eine Kombination von drei parallel angeordneten rohrförmigen Elementen (21, 22, 23) umfassen, nämlich ein Feuchtigkeit erhöhendes rohrförmiges Element (21), ein Feuchtigkeit verringerndes rohrförmiges Element (23) und ein inaktives rohrförmiges Element (22), wobei sowohl das Feuchtigkeit verringernde rohrförmige Element (21) als auch das feuchtigkeitserhöhende rohrförmige Element (23) dem inaktiven rohrförmigen Element (22) zugeordnet sind.

4. Vorrichtung (1, 2) nach einem der Ansprüche 1 bis 3, wobei die Steuermittel (26, 30, 31, 40) Ventilmittel (30, 40) umfassen, die ausgelegt sind, ein Ausmaß festzulegen, bis zu dem jedes der rohrförmigen Elemente (21, 22, 23) der Feuchtigkeitseinstellmittel an einem der Feuchtigkeitserfassungsmittel (25) zugewandten Ende der rohrförmigen Elemente (21, 22, 23) offen ist.

5. Vorrichtung (1, 2) nach Anspruch 4, wobei die Ventilmittel (30, 40) ferner ausgelegt sind, ein Ausmaß festzulegen, bis zu dem mindestens das aktive rohrförmige Element (21, 23) der Feuchtigkeitseinstellmittel am anderen Ende des rohrförmigen Elements (21, 23) offen ist.

6. Vorrichtung (1, 2) nach Anspruch 5, wobei die Ventilmittel (30, 40) ausgelegt sind, das Ausmaß festzulegen, bis zu dem mindestens das aktive rohrförmige Element (21, 23) der Feuchtigkeitseinstellmittel in entsprechender Weise für beide Enden des rohrförmigen Elements (21, 23) offen ist.

7. Vorrichtung (1, 2) nach einem der Ansprüche 4 bis 6, wobei die Steuermittel (26, 30, 31, 40) Antriebsmittel (31) zum Einstellen der Position der Ventilmittel (30, 40) umfassen und wobei die Steuermittel (26, 30, 31, 40) ausgelegt sind, den Betrieb des Antriebsmittels (31) in Abhängigkeit der von den Feuchtigkeitserfassungsmitteln (25) während des Betriebs der Vorrichtung (1, 2) erfassten Feuchtigkeit des Gases und einem Referenzwert der Feuchtigkeit zu steuern.

8. Vorrichtung (1, 2) nach Anspruch 4, wobei die Ventilmittel (30) eine verschiebbar angeordnete Platte (33) an einem Ende von mindestens zwei rohrförmigen Elementen (21, 22, 23) der Feuchtigkeitseinstellmittel umfassen, die mit einer Öffnung (35) versehen ist, damit Gas durch die Platte (33) strömen kann.

9. Vorrichtung (1, 2) nach Anspruch 8, wobei die Platte (33) allen rohrförmigen Elementen (21, 22, 23) der Feuchtigkeitseinstellmittel zugeordnet ist und vorzugsweise die Steuermittel (26, 30, 31)) ausgelegt sind, die die Position der Platte (33) in Bezug auf die rohrförmigen Elemente (21, 22, 23) der Feuchtigkeitseinstellmittel in Abhängigkeit der von den Feuchtigkeitserfassungsmitteln (25) während des Betriebs der Vorrichtung (1, 2) erfassten Feuchtigkeit des Gases und dem Referenzwert der Feuchtigkeit zu bestimmen.

10. Vorrichtung (1, 2) nach Anspruch 5 oder 6, wobei die Ventilmittel (30) eine erste Platte (32) und eine zweite Platte (33) umfassen, die mit der ersten Platte (32) gekoppelt ist, wobei beide Platten (32, 33) verschiebbar angeordnet sind, eine an einem ersten Ende von mindestens zwei rohrförmigen Elementen (21, 22, 23) der Feuchtigkeitseinstellmittel und die andere an einem zweiten Ende der rohrförmigen Elemente (21, 22, 23), wobei beide Platten (32, 33) mit einer Öffnung (34, 35) versehen sind, damit Gas durch die jeweilige Platte (32, 33) strömen kann, und wobei die Positionen der Öffnungen (34, 35) der Platten (32, 33) in Bezug auf die rohrförmigen Elemente (21, 22, 23) in einer Durchströmungsrichtung der rohrförmigen Elemente (21, 22, 23) betrachtet, einander entsprechen.

11. Vorrichtung (1, 2) nach Anspruch 4 oder 5, wobei die Ventilmittel (30) eine drehbar angeordnete Scheibe umfassen, die einem Ende von mindestens zwei rohrförmigen Elementen (21, 22, 23) der Feuchtigkeitseinstellmittel zugeordnet ist und die mit Öffnungen versehen ist, damit Gas durch die Scheibe strömen kann.

12. Vorrichtung (1, 2) nach einem der Ansprüche 1 bis 11, ferner umfassend eine mit den Steuermitteln (26, 30, 31, 40) gekoppelte Benutzerschnittstelle, um einem Benutzer der Vorrichtung (1, 2) die Einstellung der Referenzwertes der Feuchtigkeit zu ermöglichen, und wobei vorzugsweise das Feuchtigkeitserfassungsmittel (25) einen Sensor umfasst, der an einer Position nahe den rohrförmigen Elementen (21, 22, 23) des Feuchtigkeitseinstellmittels angeordnet ist.

13. Vorrichtung (1) nach einem der Ansprüche 1 bis 12, ferner umfassend eine Messkammer (10) zum Aufnehmen mindestens der
Feuchtigkeitserfassungsmittel (25), wobei die Messkammer (10) zwei Öffnungen (11, 12) in einer Wand (13) davon aufweist, wobei die Öffnungen (11, 12) ausgelegt sind, einen Gasaustausch zwischen einem Inneren und einem Äußeren der Messkammer (10) zu ermöglichen, und ein rohrförmiges Verbindungselement (15), das sich außerhalb der Messkammer (10) erstreckt, um die Öffnungen (11, 12) der Messkammer (10) miteinander zu verbinden, und wobei vorzugsweise die Strömungserzeugungsmittel (14) ausgelegt sind, eine Zirkulation des Gases sowohl durch das Verbindungselement (15) als auch die Messkammer (10) zu realisieren.

14. Vorrichtung (1, 2) nach einem der Ansprüche 1 bis 13, wobei die Strömungserzeugungsmittel (14) ausgelegt sind, die Zirkulation des Gases in der Vorrichtung (1, 2) einschließlich der rohrförmigen Elementen (21, 22, 23) der Feuchtigkeitseinstellmittel zu realisieren, und nicht mehr als eine einzige Einheit zum Verdrängen des Gases umfassen, wie eine Pumpe oder ein (elektrostatisches) Ventilator oder einen Kompressor.

15. Vorrichtung (1, 2) nach einem der Ansprüche 1 bis 14, wobei das mindestens eine aktive rohrförmige Element (21, 23) der Feuchtigkeitseinstellmittel eine austauschbare Patrone umfasst.

## Revendications

1. Dispositif (1, 2) destiné au réglage et à la commande de l'humidité d'un gaz, comprenant :
- un moyen de génération d'écoulement (14) qui est conçu pour réaliser un écoulement de gaz dans le dispositif (1, 2) pendant son fonctionnement ;
- un moyen de réglage d'humidité qui est conçu pour réaliser une action de réglage d'humidité sur un gaz s'écoulant à travers le dispositif (1, 2) pendant son fonctionnement, comprenant au moins deux éléments tubulaires (21, 22, 23) pour permettre au gaz de s'y écouler à travers, agencés en parallèle ;
- un moyen de détection d'humidité (25) permettant de détecter l'humidité du gaz dans le dispositif (1, 2) ; et
- un moyen de commande (26, 30, 31, 40) permettant de commander l'accès aux éléments tubulaires (21, 22, 23) du moyen de réglage d'humidité, à au moins une extrémité des éléments tubulaires (21, 22, 23), dépendant de l'humidité du gaz telle que détectée par le moyen de détection d'humidité (25) pendant le fonctionnement du dispositif (1, 2) et une valeur de référence de l'humidité ; dans lequel au moins un parmi les éléments tubulaires (21, 22, 23) du moyen de réglage d'humidité est un élément tubulaire actif (21, 23) comprenant un parmi 1) un élément tubulaire permettant de faire diminuer l'humidité (21) conçu pour laisser un gaz s'y écouler à travers et pour faire diminuer l'humidité du gaz, et 2) un élément tubulaire permettant d'augmenter d'humidité (23) conçu pour laisser un gaz s'y écouler à travers et pour augmenter l'humidité du gaz, et dans lequel au moins un des éléments tubulaires (21, 22, 23) du moyen de détection d'humidité est un élément tubulaire inactif (22) conçu pour uniquement laisser un gaz s'y écouler à travers sans réaliser une action de réglage d'humidité sur le gaz.

2. Dispositif (1) selon la revendication 1, dans lequel le moyen de réglage humidité comprend au moins deux éléments tubulaires actifs (21, 23) et au moins un élément tubulaire inactif (22), et dans lequel chacun des éléments tubulaires actifs (21, 23) est associé à au moins un élément tubulaire inactif (22), selon un agencement parallèle.

3. Dispositif (1) selon la revendication 1 ou 2, dans lequel le moyen de réglage d'humidité comprend une combinaison de trois éléments tubulaires (21, 22, 23) agencés en parallèle, à savoir un élément tubulaire permettant de diminuer l'humidité (21), un élément tabulaire permettant augmenter l'humidité (23) et un élément tubulaire inactif (22), dans lequel à la fois l'élément tubulaire permettant de diminuer l'humidité et (21) et l'élément tubulaire permettant d'augmenter l'humidité (23) sont associés à l'élément tubulaire inactif (22).

4. Dispositif (1, 2) selon l'une quelconque des revendications 1 à 3, dans lequel le moyen de contrôle (26, 30, 31, 40) comprend un moyen de vanne (30, 40) qui est conçu pour régler une extension à laquelle chacun des éléments tubulaires (21,22, 23) du moyen de réglage d'humidité est ouverte au niveau d'une extrémité des éléments tubulaires (21, 22, 23) faisant face au moyen de détection d'humidité (25).

5. Dispositif (1, 2) selon la revendication 4, dans lequel le moyen de vanne (30, 40) est en outre conçu pour régler une extension à laquelle l'élément tubulaire actif (21, 23) du moyen de réglage humidité est au moins ouverte au niveau de l'autre extrémité de l'élément tubulaire (21, 23).

6. Dispositif (1, 2) selon la revendication 5, dans lequel le moyen de vanne (30, 40) est conçu pour régler l'extension à laquelle l'élément tubulaire actif (21, 23) du moyen de réglage d'humidité est au moins ouverte d'une manière correspondante pour les deux extrémités de l'élément tubulaire (21, 23).

7. Dispositif (1, 2) selon l'une quelconque des revendications 4 à 6, dans lequel le moyen de commande (26, 30, 31, 40) comprend un moyen d'entraînement (31) permettant de régler la position du moyen de vanne (30, 40), et dans lequel le moyen de commande (26, 30, 31, 40) est conçu pour commander le fonctionnement du moyen d'entraînement (31) dépendant de l'humidité du gaz telle que détectée par le moyen de détection d'humidité (25) pendant le fonctionnement du dispositif (1, 2) et la valeur de référence de l'humidité.

8. Dispositif (1, 2) selon la revendication 4, dans lequel le moyen de vanne (30) comprend une plaque agencée de manière coulissante (33), au niveau d'une extrémité d'au moins deux éléments tubulaire (21, 22, 23) du moyen de réglage d'humidité, qui est équipée d'une ouverture (35) permettant au gaz de s'écouler à travers la plaque (33).

9. Dispositif (1, 2) selon la revendication 8, dans lequel la plaque (33) est associée à tous les éléments tubulaires (21, 22, 23) du moyen de réglage humidité, et dans lequel le moyen de commande (26, 30, 31) est de préférence conçu pour déterminer la position de la plaque (33) par rapport aux éléments tubulaires (21, 22, 23) du moyen de réglage humidité dépendant de l'humidité du gaz telle que détectée par le moyen de détection d'humidité (25) pendant le fonctionnement du dispositif (1, 2) et la valeur de référence de l'humidité.

10. Dispositif (1, 2) selon la revendication 5 ou la revendication 6, dans lequel le moyen de vanne (30) comprend une première plaque (32) et une seconde plaque (33) connectée à la première plaque (32), dans lequel les deux plaques (32, 33) sont agencées de manière coulissante, une au niveau d'une première extrémité d'au moins deux éléments tubulaires (21, 22, 23) du moyen de réglage d'humidité, et l'autre au niveau de la seconde extrémité des éléments tubulaires (21, 22, 23), dans lequel les deux plaques (32, 33) sont équipées d'une ouverture (34, 35) permettant à un gaz de s'écouler à travers la plaque respective (32, 33), et dans lequel les positions des ouvertures (34, 35) des plaques (32, 33) par rapport aux éléments tubulaires (21, 22, 23) comme le montre une direction d'écoulement des éléments tubulaires (21, 22, 23) correspondent l'une avec l'autre.

11. Dispositif (1, 2) selon la revendication 4 ou 5, dans lequel le moyen de vanne (30) comprend un disque agencé de manière rotative, qui est associé à une extrémité d'au moins deux éléments tubulaires (21, 22, 23) du moyen de réglage d'humidité, et qui est équipé d'ouvertures permettant à un gaz de s'écouler à travers le disque.

12. Dispositif (1, 2) selon l'une quelconque des revendications 1 à 11, comprenant en outre une interface utilisateur connectée au moyen de commande (26, 30, 31, 40) permettant à un utilisateur du dispositif (1, 2) de régler la valeur de référence de l'humidité, et dans lequel le moyen de détection d'humidité (25) comprend de préférence un capteur qui est agencé à une position située à proximité des éléments tubulaires (21, 22, 23) du moyen de réglage d'humidité.

13. Dispositif (1) selon l'une quelconque des revendications 1 à 12, comprenant en outre une chambre de mesure (10) permettant de loger au moins le moyen de détection d'humidité (25), la chambre de mesure (10) comportant deux ouvertures (11, 12) situées dans une paroi (13) de celle-ci, lesquelles ouvertures (11, 12) sont conçues pour permettre un échange de gaz entre un intérieur et un extérieur de la chambre de mesure (10), et un élément de raccordement tubulaire (15) s'étendant à l'extérieur de la chambre de mesure (10) permettant d'interconnecter les ouvertures (11, 12) de la chambre de mesure (10), et dans lequel le moyen de génération d'écoulement (14) est de préférence conçu pour réaliser une circulation du gaz à travers à la fois l'élément de raccordement (15) et la chambre de mesure (10).

14. Dispositif (1, 2) selon l'une quelconque des revendications 1 à 13, dans lequel le moyen de génération d'écoulement (14) est conçu pour réaliser une circulation du gaz dans le dispositif (1, 2) comprenant les éléments tubulaires (21, 22, 23) du moyen de réglage d'humidité, et ne comprend pas plus d'une simple unité destinée au déplacement du gaz, telle qu'une pompe, ou un ventilateur (électrostatique), ou un compresseur.

15. Dispositif (1, 2) selon l'une quelconque des revendications 1 à 14, dans lequel l'au moins un élément tubulaire actif (21, 23) du moyen de réglage d'humidité comprend une cartouche remplaçable.
